# EUROPÄISCHE PATENTSCHRIFT

(11) **EP 1 042 644 B1**
(45) Veröffentlichungstag und Bekanntmachung des Hinweises auf die Patenterteilung: **28.07.2004**
(21) Anmeldenummer: 98966793.6
(22) Anmeldetag: 21.12.1998
(51) Int. Cl.: G01B 11/275, G06T 7/00

(54) **VORRICHTUNG ZUM BESTIMMEN DER RAD- UND/ODER ACHSGEOMETRIE VON KRAFTFAHRZEUGEN**
DEVICE FOR DETERMINING THE GEOMETRY OF A WHEEL AND/OR AXLE IN MOTOR VEHICLES
DISPOSITIF DE DETERMINATION DE LA GEOMETRIE DE ROUES ET/OU D'ESSIEUX DE VEHICULES A MOTEUR

(30) Priorität: 23.12.1997 DE 19757763
(43) Veröffentlichungstag der Anmeldung: 11.10.2000
(73) Patentinhaber: ROBERT BOSCH GMBH, 70442 Stuttgart (DE)
(72) Erfinder: NOBIS, Guenter, D-73240 Wendlingen (DE); UFFENKAMP, Volker, D-73430 Aalen (DE)
(86) Internationale Anmeldenummer: PCT/DE1998/003743
(87) Internationale Veröffentlichungsnummer: WO 1999/034166

(56) Entgegenhaltungen:
- EP-A- 0 587 328
- EP-A- 0 803 703
- DE-C- 4 212 426
- US-A- 5 675 515

## Beschreibung

### Stand der Technik

Die Erfindung bezieht sich auf eine Vorrichtung zum Bestimmen der Rad- und Achsgeometrie von Kraftfahrzeugen in einem Messraum mit einer mindestens eine optische Bildaufnahmeeinrichtung aufweisenden optischen Messeinrichtung, mit einer Markierungseinrichtung, die eine am Rad vorhandene oder angeordnete Messmerkmalsanordnung, mindestens drei Messmerkmale pro Rad sowie mindestens eine Bezugsmerkmalsanordnung mit mindestens drei Bezugsmerkmalen pro Bildaufnahmeposition aufweist, und mit einer Auswerteeinrichtung, wobei die Lage der Bezugsmerkmale in dem Messraum in der Auswerteeinrichtung bekannt ist und die Markierungseinrichtung mittels der Messeinrichtung aus mindestens zwei unterschiedlichen Perspektiven aufnehmbar ist.

Eine derartige Vorrichtung zum Bestimmen der Rad- und Achsgeometrie von Kraftfahrzeugen ist in der US-A 5,675,515 angegeben. Bei dieser bekannten Vorrichtung sind an den Rädern Radmerkmale und an die Räder aufnehmenden Plattformen Bezugsmerkmale auf beiden Seiten des zu vermessenden Fahrzeugs angeordnet. Die Merkmale auf jeder Seite des Fahrzeuges werden jeweils von einer getrennten Kamera aus jeweils nur einer Perspektive aufgenommen. Die Kameras der beiden Fahrzeugseiten sind über eine mechanische Verbindung starr aneinander gekoppelt. Mit dieser Vorrichtung, bei der zwei getrennte Kameras getrennten Aufnahmefeldern zugeordnet sind, soll eine bekannte Einrichtung ersetzt werden, bei der Messmarken mit nur einer Kamera aber zwei getrennten Aufnahmefeldern unter Verwendung von Spiegeln und Strahlteilern zur Vermessung aufgenommen werden.

Eine weitere Vorrichtung zum Bestimmen der Rad- und Achsgeometrie ist in der DE-A 42 12 426 angegeben. Bei dieser bekannten Vorrichtung werden bei einem Fahrzeug zur Bestimmung von Spur und Sturz charakteristische Bereiche der Räder mit Fernsehkameras aufgezeichnet. Das entsprechende Rad ist außerhalb seiner Achse mit einer optisch registrierbaren Markierung versehen, die während der Drehung des Rades mit zwei synchronisierten Fernsehkameras erfasst wird. Aus den Raumlagen der Markierungen auf den Rädern werden die Relativstellungen der zugehörigen Achsen ermittelt. Die Fernsehkameras sind symmetrisch zur Achse des entsprechenden Rads angeordnet, wobei das Fahrzeug auf Rollen steht und die Räder sich in Rollenprismen drehen. Mit diesem System sind die Messmöglichkeiten von Rad- bzw. Achsgeometrien auf Spurund Sturzmessung eingeschränkt, und eine Justage der Achsgeometrie erfordert einen nicht geringen Aufwand. Eine Korrektur der Achsgeometrie ist auf dem Rollenprüfstand nicht möglich.

Der Erfindung liegt die Aufgabe zugrunde, eine Vorrichtung der eingangs angegebenen Art bereitzustellen, mit der mehr Aussagen zur Rad- und Achsgeometrie bei vereinfachter Bedienung ermöglicht werden und die Korrekturen am Fahrwerk während der Messung zulässt (z.B. über der Arbeitsgrube).

Diese Aufgabe wird mit den Merkmalen des Anspruchs 1 gelöst. Hiernach ist vorgesehen, dass die mindestens eine Bildaufnahmeeinrichtung zum Aufnehmen eines zumindest für die Auswertung ausreichenden Teils derselben Messmerkmale und Bezugsmerkmale aus den beiden unterschiedlichen Perspektiven ausgerichtet ist, und dass die Auswerteeinrichtung derart ausgebildet ist, dass zur Bestimmung der Rad- und Achsgeometrie die relative Lage der aus den unterschiedlichen Perspektiven mittels der mindestens einen Bildaufnahmeeinrichtung gemeinsam aufgenommenen Messmerkmale zu den Bezugsmerkmalen ermittelbar ist.

Mit dieser Vorrichtung können die Fahrachse und weiterhin folgende Rad- und Achsgeometriedaten in der Auswerteeinrichtung rechnerisch mit an sich bekannten Algorithmen automatisch ermittelt werden: Einzelspur für jedes Rad, Gesamtspur für jedes Radpaar, Sturz für jedes Rad, Radversatz vorn/hinten, Seitenversatz rechts/links, Spurweitendifferenz, Achsversatz, Lenkwinkel, Nachlauf, Spreizung und Spurdifferenzwinkel sowie Lage der Raumlenker-Achse als Funktion des Lenkwinkels jedes gelenkten Rades, wobei die Positionierung der Bildaufnahmeeinrichtung wegen der Einbeziehung der Bezugsmerkmale äußerst einfach ist. Mit Hilfe der in der Auswerteeinrichtung bekannten Bezugsmerkmale kann zunächst die Kameraposition bestimmt und gleichzeitig oder anschließend die relative Lage der Messmerkmale zu den Bezugsmerkmalen ermittelt werden, woraus sich dann die genannten Werte der Rad- und Achsgeometrien gewinnen lassen. Eine Justage der Bildaufnahmeeinrichtung ist nicht erforderlich.

Ein einfacher Aufbau mit zuverlässig erfassbaren Bezugsmerkmalen wird dadurch erzielt, dass die Bezugsmerkmalsanordnung eine Trägereinheit aufweist, an der die Bezugsmerkmale in Form von Bezugsstrukturen oder speziell angebrachten Bezugsmarken vorgesehen sind. Dadurch wird die Zuverlässigkeit der Messergebnisse unterstützt.

Sind die Bezugsmerkmale zusätzlich zu einer ebenen, flächenhaften Anordnung bezüglich der Bildaufnahmeeinrichtung auch räumlich versetzt angeordnet, so ist die Auswertung bei hoher Zuverlässigkeit der Messergebnisse gegenüber einer ebenen Anordnung der Bezugsmerkmale vereinfacht.

Für eine zuverlässige Erfassung der Bezugsmerkmale sind weiterhin die Maßnahmen vorteilhaft, dass die Bezugsmerkmale und/oder die Messmerkmale als retroreflektierende Marken ausgebildet sind und dass die Bildaufnahmeeinrichtung eine Kamera ist.

Ist vorgesehen, dass als zusätzliche Messmerkmale Karosseriestrukturen oder zusätzliche speziell angebrachte Karosseriemarkierungen, mittels der mindestens einen Bildaufnahmeeinrichtung erfassbar und in die Auswertung einbeziehbar sind, so können mit der gleichen Vorrichtung parallel zu den Rad- und Achsgeometriedaten der Einfederungszustand bzw. Beladungszustand je Rad und/oder die Neigung der Karosserie in Längs- und Querrichtung erfaßt und gegebenenfalls in fahrzeugspezifischen Korrekturrechnungen berücksichtigt werden.

Ein kostengünstiger Aufbau der Vorrichtung ergibt sich dadurch, daß bei statischer Meßaufgabe nur eine Bildaufnahmeeinrichtung vorgesehen ist, die sequentiell an zwei verschiedenen Positionen zur jeweiligen gemeinsamen Erfassung aller Räder des Fahrzeugs oder sequentiell an zwei verschiedenen Positionen pro Fahrzeugseite zur jeweiligen gemeinsamen Erfassung aller Räder dieser Fahrzeugseite, oder sequentiell an zwei verschiedenen Positionen pro Rad positionierbar ist, und daß mittels der Auswerteeinrichtung die sequentiell erfaßten Bilddaten speicherbar und auswertbar sind.

Demgegenüber wird eine vereinfachte Bedienung dadurch erzielt, daß eine Meßeinheit mit mindestens zwei Bildaufnahmeeinrichtungen vorgesehen ist, die an nur einer Position zur gemeinsamen Erfassung aller Räder des Fahrzeugs oder sequentiell auf beiden Fahrzeugseiten an jeweils nur einer Position zur gemeinsamen Erfassung aller Räder pro Fahrzeugseite oder sequentiell an nur einer Position pro Rad anordenbar ist, und daß mittels der Auswerteeinrichtung die sequentiell erfaßten Bilddaten speicherbar und auswertbar sind.

Eine weiter vereinfachte Bedienung wird dadurch erreicht, daß zwei Meßeinheiten mit jeweils mindestens zwei Bildaufnahmeeinrichtungen vorgesehen sind, daß die beiden Meßeinheiten so auf beiden Seiten des Fahrzeugs plaziert werden, daß sie jeweils die Räder einer Fahrzeugseite erfassen, oder daß die beiden Meßeinheiten so auf einer Fahrzeugseite plaziert werden, daß jede ein Rad erfaßt und beide Fahrzeugseiten sequentiell erfaßt werden, oder daß die beiden Meßeinheiten so plaziert werden, daß jeweils ein Rad einer Fahrzeugachse auf beiden Fahrzeugseiten erfaßt werden, und die Fahrzeugachsen sequentiell erfaßt werden und daß mittels der Auswerteeinrichtung die sequentiell erfaßten Bilddaten speicherbar und auswertbar sind und weiterhin dadurch, daß vier Meßeinheiten mit jeweils mindestens zwei Bildaufnahmeeinrichtungen zur gleichzeitigen Erfassung von vier Rädern des Fahrzeugs vorgesehen sind.

Die Erfassung der Meßdaten und die Auswertung werden dadurch begünstigt, daß eine Meßeinheit mindestens drei Kameras umfaßt.

Mit der Maßnahme, daß zur Beleuchtung der Meßmerkmale und der Bezugsmerkmale mindestens eine Lichtquelle eingesetzt wird, wird die Erfaßbarkeit der Meßmerkmale und der Bezugsmerkmale weiterhin begünstigt. Mindestens eine Lichtquelle in der Nähe des Objektivs der Bildaufnahmeeinrichtung(en) begünstigt die Erfaßbarkeit retroreflektierender Meß- und Bezugsmerkmale. Ist dabei vorgesehen, daß die Lichtquellen Infrarot-Leuchtdioden sind, so wird eine Beeinträchtigung der Lichtverhältnisse für die Gerätebediener am Meßort vermieden.

Die Räder bzw. auch mehrere Fahrzeuge können automatisch dadurch unterschieden werden, daß mindestens eine Meßmarke pro Rad oder pro Fahrzeug eine von der Bildaufnahmeeinrichtung erfaßbare Codierung trägt. Durch Codieren mindestens einer der angebrachten Radmarken ist es dabei insbesondere auch möglich, den Betrag eines Formfehlers einer Felge der entsprechenden Radmarke eindeutig zuzuordnen und bei den nachfolgenden Messungen bzw. Auswertungen zu berücksichtigen bzw. zu korrigieren.

Mit den genannten Maßnahmen kann auf eine exakte Nivellierung eines Meßplatzes weitgehend verzichtet werden. Die Vorrichtung weist keinen absoluten Bezug zu einer Normalrichtung, sondern ausschließlich relative Bezüge zu der Bezugsanordnung des Meßplatzes auf. Deshalb können die Anforderungen an die Ebenheit des Meßplatzes auf das vom Fahrzeug her erforderliche Maß reduziert werden.

Die Angabe der erhaltenen Geometriedaten ist nicht auf Winkeleinheiten beschränkt, diese können auch als absolute Längeneinheiten angegeben werden.

Die bisher bei manchen Systemen erforderliche Justage der Meßeinrichtung am Rad entfällt. Die Positionierung der optischen Bildaufnahmeeinrichtung schräg gegenüber einem Rad/Rädern und der Bezugsanordnung kann auf einfache Weise grob erfolgen und beispielsweise durch Positionierhilfen sehr einfach kontrolliert werden.

Die Meßwerterfassung selbst geschieht in Sekundenbruchteilen, wobei für alle Meßgrößen eine hohe Genauigkeit bei gleichzeitig großem Meßbereich gegeben ist.

Die bisher an Drehplatten erforderliche Winkelmeßvorrichtung zur Bestimmung der Größe des Lenkeinschlags entfällt, da das Meßsystem diesen Winkel selbst bestimmt.

Mit der gleichen Vorrichtung können auf einem weiteren Meßplatz, der auf die Abmessungen von Nutzfahrzeugen ausgelegt ist, die Rad- und Achsgeometriedaten von Nutzfahrzeugen ermittelt werden. Dafür ist keine andere Prüftechnik erforderlich.

Die Erfindung wird nachfolgend anhand eines Ausführungsbeispiels unter Bezugnahme auf die Zeichnungen näher erläutert. Es zeigen:
- Fig. 1: eine Anordnung einer Vorrichtung zum Bestimmen der Rad- und Achsgeometrie aus einer Sicht in Fahrzeuglängsrichtung,
- Fig. 2: eine Anordnung entsprechend Fig. 1 in seitlicher Ansicht und
- Fig. 3: eine Anordnung gemäß den Fig. 1 und 2 in Draufsicht.

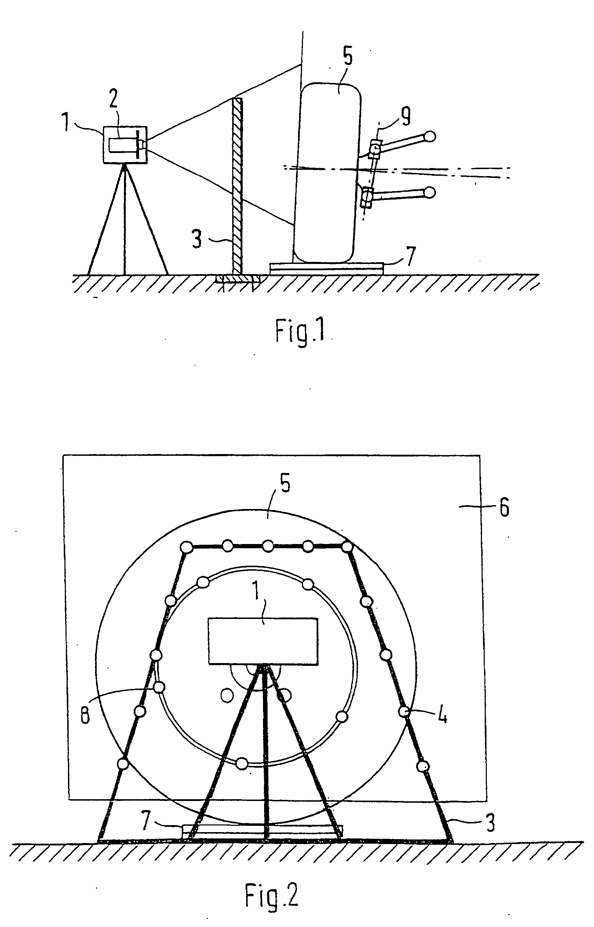

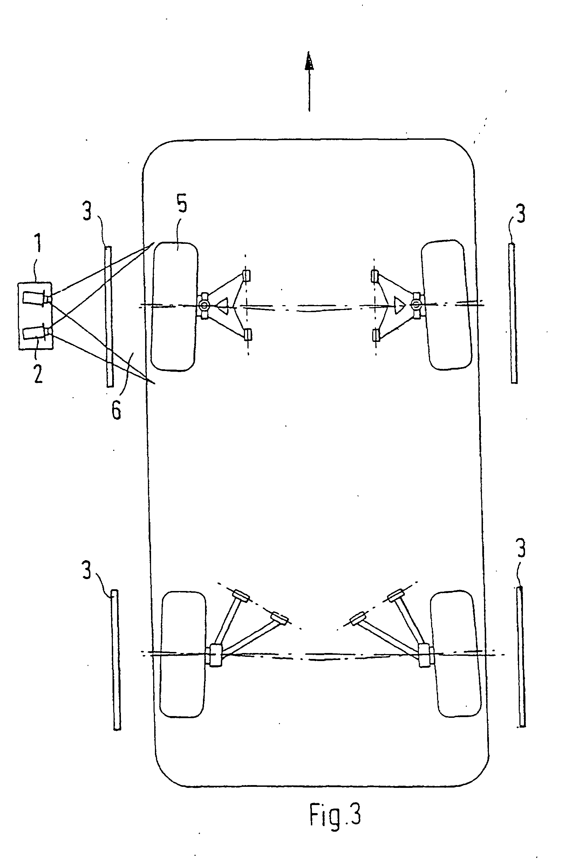

Fig. 1 zeigt eine Vorrichtung zum Bestimmen der Rad- und Achsgeometrie eines Fahrzeugs mit einer seitlich von dem Rad 5 auf einem Stativ angeordneten Meßeinheit 1 und einer zwischen dieser und dem Rad 5 angeordneten Bezugsmerkmalsanordnung 3. Wie in Verbindung mit Fig. 3 ersichtlich, weist die Meßeinheit 1 vorliegend zwei Bildaufnahmeeinrichtungen in Form von Kameras 2 auf, die einen Bildausschnitt 6 erfassen, in dem sowohl das Rad 5 als auch die Bezugsmerkmalsanordnung 3 zumindest teilweise liegen. Aus der seitlichen Darstellung gemäß Fig. 2 ist erkennbar, daß die Bezugsmerkmalsanordnung 3 einen trapezförmigen Rahmen mit mehreren Bezugsmarken 4 aufweist und daß an dem Felgenhorn des Rades 5 in Umfangsrichtung verteilt mehrere Meßmarken 8 angeordnet sind. Das in den Fig. 1 und 2 gezeigte Vorderrad steht auf einer Drehplatte 7, um leicht eine Lenkbewegung ausführen zu können. Die Bezugsmerkmalsanordnung 3 umfaßt mindestens drei Bezugsmarken 4, während an dem Rad 5 mindestens drei Meßmarken 8 angebracht sind. Die Bezugsmarken 4 und die Meßmarken 3 sind vorzugsweise retroreflektierend ausgebildet. Auch eine Lenkachse 9 ist angegeben.

Die beispielhaft kreisförmigen, optisch diffus reflektierenden Bezugsmarken 4 und Meßmarken 8 besitzen einen Durchmesser, der in Abhängigkeit von dem Abbildungsmaßstab des Kameraobjektivs, der Größe des z.B. als CCD-Empfänger ausgebildeten Empfängerelements und dem Objektabstand ausgewählt ist. Die Meßmarken 8 sind nur ungefähr gleichmäßig über den Radumfang verteilt anzubringen, eine Justage ist dabei nicht erforderlich.

Der Meßkopf 1 enthält mindestens zwei CCD-Kameras 2, die aus unterschiedlichem Winkel und in einem ausreichend großen Abstand das Rad 5 und insbesondere die angebrachten Bezugsmarken 4 und Meßmarken 8 erfassen. Dabei ist es zum Erreichen einer hohen Meßgenauigkeit vorteilhaft, die Marken von der Kamera 2 aus zu beleuchten. Dies kann relativ einfach mit um das Objektiv herum angeordneten Lichtquellen z. B. in Form von Leuchtdioden (LED's) geschehen, die vorteilhafterweise Licht im Infrarotbereich bzw. im nahen Infrarotbereich aussenden, wodurch eine Beeinträchtigung der Lichtverhältnisse für Gerätebediener am Meßort vermieden wird.

Vor der eigentlichen Messung ist das Fahrzeug anzuheben, so daß sich die Räder frei drehen lassen. Dann ist die Meßeinheit in Form des Meßkopfs 1 seitlich neben dem Rad 5 zu positionieren.

Dann wird eine Messung zur Bestimmung der Lage der Meßmarken 8 bezüglich der Raddrehachse gestartet. Die Bildaufnahme erfolgt entweder in mindestens drei unterschiedlichen Rad-Drehpositionen oder das betreffende Rad wird in Drehung versetzt und dabei (ausreichend schnell) in mindestens drei Drehwinkelpositionen aufgenommen. Im zeiten Fall ist für ausreichende Synchronisation der Bilder zu sorgen. Aus den aufgenommenen Bildern werden für jede Meßmarke 8 die Lage bezüglich der Drehachse und die Drehebene mit bekannten Verfahren der Triangulation ermittelt. Für eine ideal geformte Felge sind die Drehebenen aller Meßmarken 8 identisch. Abweichungen zwischen den Drehebenen weisen auf vorhandene Formfehler der Felge hin. Allgemein werden diese Formfehler als Felgenschlag bezeichnet. Durch Codieren mindestens einer der angebrachten Meßmarken 8 ist es möglich, den Betrag dieser Formabweichung jeder Marke eindeutig zuzuordnen und bei den nachfolgenden Messungen bzw. Auswertungen zu berücksichtigen bzw. zu korrigieren.

Diese Messung ist an jedem Rad 5 durchzuführen, wobei es vorteilhaft ist, an jedem Rad 5 mindestens eine unterschiedlich codierte Meßmarke 8 anzubringen, um so die Räder 5 (unter Umständen auch mehrere Fahrzeuge) automatisch voneinander unterscheiden zu können.

Danach wird das Fahrzeug, sofern dies nicht schon bei der Ermittlung des Felgenschlages erfolgt war, auf einen an sich bekannten Meßplatz, der vorzugsweise mit Drehplatten 7 für die Vorderräder 5 und Schiebeplatten für die Hinterräder ausgestattet ist, gefahren. Dieser Meßplatz weist im Unterschied zu den bekannten Ausführungsformen die vier Bezugsmerkmalsanordnungen 3, die den Meßraum über dem Meßplatz aufspannen, mit den daran befestigten Bezugsmarken 4 auf, deren Raumkoordinaten (relativ zueinander) durch vorherige Vermessung bekannt sind.

Der trapezförmige Rahmen oder auch ein anders geformtes Gestell mit den in einer ebenen Fläche oder räumlich zueinander versetzt angeordneten Bezugsmarken 4 ist im Bereich des Rades 5 am Boden verankert und kann, falls erwünscht, abklappbar oder verschiebbar befestigt sein. Dabei ist zu gewährleisten, daß sie in eine bekannte, vermessene Position gebracht werden. Wie Fig. 3 zeigt, sind derartige Bezugsmerkmalsanordnungen 3 neben jedem Rad 5 angeordnet oder anordenbar, so daß das Fahrzeug problemlos dazwischen positioniert werden kann.

Zur Bestimmung der Rad- und Achsgeometriedaten werden nun entweder mit nur einem Meßkopf 1 mit zwei Kameras 2 nacheinander Aufnahmen (mindestens eine je Kamera) von jedem Rad 5 gemacht und in einer Auswerteeinrichtung gespeichert oder die Messung geschieht durch Anordnung mehrerer Meßköpfe 1 gleichzeitig an mehreren Rädern 5. Auch reicht bereits nur eine Kamera 2, die an mindestens zwei verschiedene Meßpositionen verschoben werden kann, um in zwei aufeinanderfolgenden Meßvorgängen jeweils die Bezugsmarken 4 und die Meßmarken 8 zu erfassen. Beispielsweise können aus einer geeigneten Position über dem Fahrzeug (oder davor oder dahinter) auch alle vier Räder 5 mit den daran entsprechend angebrachten Meßmarken 8 erfaßt werden, wenn die Meßmarken 8 entsprechend weit an den Rädern 5 vorstehend mittels Haltern befestigt sind.

Vor Beginn der Aufnahmen ist der Meßkopf 1 vorliegend seitlich neben dem Rad 5 und der Bezugsmerkmalsanordnung 3 grob so zu positionieren, daß das Rad 5 und die Bezugsmerkmalsanordnung 3 (bzw. ein ausreichender Teil davon) von den Kameras 2 des Meßkopfes 1 erfaßt und ein Maximalabstand zum Rad 5 nicht überschritten wird. Vorzugsweise ist der Meßkopf zur Unterstützung des Gerätebedieners mit einer entsprechenden Positionierhilfe (Meßfläche/Objektraum und Abstand) ausgestattet. Die gespeicherten Aufnahmen werden nun mit bekannten Verfahren der Bildverarbeitung und Triangulation ausgewertet, so daß die Koordinaten der am Rad 5 befestigten Meßmarken 8 in Relation zu der Bezugsmerkmalsanordnung 3 erhalten werden.

Mit den Koordinaten der Meßmarken 8 jedes Rades 5 sowie den der Auswerteeinrichtung bekanntere Lagen der Bezugssysteme 3 und mit dem vorher ermittelten Felgenschlag können nun das Fahrzeugkoordinatensystem (z. B. Fahrzeuglängsachse/-ebene bzw. Fahrachse) und folgende Rad- und Achsgeometriedaten rechnerisch ermittelt werden: Spur für jedes Rad, Gesamtspur, Sturz für jedes Rad, Radversatz vorn/hinten, Seitenversatz rechts/links, Spurweitendifferenz und Achsversatz.

Diese Geometriedaten liegen als Winkelgrößen vor, können aber auch in Längeneinheiten angegeben werden. In diese Angaben kann auch die Spurweite mit einbezogen werden. Durch Anbringen zusätzlicher Meßmarken an definierten Punkten der Karosserie (im Bereich des Radausschnittes) können zusätzlich der Einfederungszustand bzw. Beladungszustand je Rad 5 und/oder die Neigung der Karosserie in Längs- und Querrichtung erfaßt werden. Damit ist es möglich, Abweichungen von einer vorgegebenen Gleichmäßigkeit des Beladungszustandes schnell zu erkennen und, falls erforderlich, durch entsprechende Zu-/Entladung zu korrigieren oder in fahrzeugspezifischen Korrekturrechnungen zu berücksichtigen.

Die Ermittlung weiterer Rad- bzw. Lenkgeometriedaten an den gelenkten Rädern 5 geschieht wie üblich durch Einschlagen der Räder 5 um einen definierten Lenkwinkel. Bei vorliegendem Verfahren wird der Lenkwinkel aus der Veränderung der Koordinaten der am Rad 5 befestigten Meßmarken 8 bestimmt, ebenso die Werte für Nachlauf, Spreizung und Spurdifferenzwinkel und Lage der Raumlenker-Achse als Funktion des Lenkwinkels.

Die Drehachse ist nicht nur in ihren Winkeln, sondern auch in ihrer Raumlage im Meßplatz erfaßt. Darum läßt sich der Rollradius der Räder und daraus weiter Nachlauf und Spreizung in Längeneinheiten angeben. Vorteilhaft wird zur Ermittlung dieser Geometriedaten seitlich neben jedem gelenkten Rad 5 ein eigener Meßkopf 1 positioniert, so daß die Ergebnisse für diese Räder 5 gleichzeitig angezeigt werden können.

Ist die Vorrichtung mit nur einem Meßkopf 1 ausgeführt, dann muß die Messung an jedem Rad 5 nacheinander durchgeführt werden.

Anstelle der Bezugsmarken 4 und/oder der Meßmarken 8 können auch mindestens drei charakteristische Punkte oder charakteristische Kanten als Bezugs- bzw. Meßwerkmale für die Erfassung und Bildverarbeitung herangezogen werden, die mittels der Auswerteeinrichtung identifiziert und deren geometrische Lage bestimmt wird.

## Patentansprüche

1. Vorrichtung zum Bestimmen der Rad- und Achsgeometrie von Kraftfahrzeugen in einem Messraum mit einer mindestens eine optische Bildaufnahmeeinrichtung (2) aufweisenden optischen Messeinrichtung, mit einer Markierungseinrichtung (3, 4, 8), die eine am Rad (5) vorhandene oder angeordnete Messmerkmalsanordnung, mindestens drei Messmerkmale (8) pro Rad (5) sowie mindestens eine Bezugsmerkmalsanordnung (3) mit mindestens drei Bezugsmerkmalen (4) pro Bildaufnahmeposition aufweist, und mit einer Auswerteeinrichtung, wobei die Lage der Bezugsmerkmale (4) in dem Messraum in der Auswerteeinrichtung bekannt ist und die Markierungseinrichtung (3, 4, 8) mittels der Messeinrichtung aus mindestens zwei unterschiedlichen Perspektiven aufnehmbar ist,
**dadurch gekennzeichnet,**
**dass** die mindestens eine Bildaufnahmeeinrichtung zum Aufnehmen eines zumindest für die Auswertung ausreichenden Teils derselben Messmerkmale (8) und Bezugsmerkmale (4) aus den beiden unterschiedlichen Perspektiven ausgerichtet ist, und
**dass** die Auswerteeinrichtung derart ausgebildet ist, dass zur Bestimmung der Rad- und Achsgeometrie die relative Lage der aus den unterschiedlichen Perspektiven mittels der mindestens einen Bildaufnahmeeinrichtung gemeinsam aufgenommenen Messmerkmale (8) zu den Bezugsmerkmalen (4) ermittelbar ist.

2. Vorrichtung nach Anspruch 1,
**dadurch gekennzeichnet,**
**dass** die Bezugsmerkmalsanordnung (3) eine Trägereinheit aufweist, deren Anordnung im Messraum frei gestaltbar ist und an der die Bezugsmerkmale in Form von Bezugsstrukturen oder speziell angebrachten Bezugsmarken (4) vorgesehen sind.

3. Vorrichtung nach Anspruch 1 oder 2,
**dadurch gekennzeichnet,**
**dass** als zusätzliche Messmerkmale Karosseriestrukturen oder zusätzliche speziell angebrachte Karosseriemarkierungen, mittels der mindestens einen Bildaufnahmeeinrichtung (2) erfassbar und in die Auswertung einbeziehbar sind.

4. Vorrichtung nach einem der vorhergehenden Ansprüche,
**dadurch gekennzeichnet,**
**dass** die Bezugsmerkmale (4) bezüglich der Bildaufnahmeposition räumlich versetzt angeordnet sind.

5. Vorrichtung nach einem der vorhergehenden Ansprüche,
**dadurch gekennzeichnet,**
**dass** die Bezugsmerkmale (4) und/oder die Messmerkmale (8) als retroreflektierende Marken ausgebildet sind und
**dass** die Bildaufnahmeeinrichtung eine Kamera (2) ist.

6. Vorrichtung nach einem der vorhergehenden Ansprüche,
**dadurch gekennzeichnet,**
**dass** nur eine Bildaufnahmeeinrichtung (2) vorgesehen ist, die sequentiell an zwei verschiedenen Positionen zur jeweiligen gemeinsamen Erfassung aller Räder (5) des Fahrzeugs oder sequentiell an zwei verschiedenen Positionen pro Fahrzeugseite zur jeweiligen gemeinsamen Erfassung aller Räder (5) dieser Fahrzeugseite oder sequentiell an zwei verschiedenen Positionen pro Rad (5) positionierbar ist, und
**dass** mittels der Auswerteeinrichtung die sequentiell erfassten Bilddaten speicherbar und auswertbar sind.

7. Vorrichtung nach einem der Ansprüche 1 bis 5,
**dadurch gekennzeichnet,**
**dass** eine Meßeinheit (1) mit mindestens zwei Bildaufnahmeeinrichtungen (2) vorgesehen ist, die an nur einer Position zur gemeinsamen Erfassung aller Räder (5) des Fahrzeugs, sequentiell auf beiden Fahrzeugseiten an jeweils nur einer Position zur gemeinsamen Erfassung aller Räder (5) pro Fahrzeugseite oder sequentiell an nur einer Position pro Rad anordenbar ist, und
**dass** mittels der Auswerteeinrichtung die sequentiell erfassten Bilddaten speicherbar und auswertbar sind.

8. Vorrichtung nach einem der Ansprüche 1 bis 5,
**dadurch gekennzeichnet,**
**dass** zwei Messeinheiten (1) mit jeweils mindestens zwei Bildaufnahmeeinrichtungen (2) vorgesehen sind,
**dass** die beiden Messeinheiten (1) so auf beiden Seiten des Fahrzeugs plaziert sind, dass von ihnen jeweils die Räder (5) einer Fahrzeugseite erfassbar sind, oder dass die beiden Messeinheiten (1) so auf einer Fahrzeugseite plaziert sind, dass von jeder ein Rad (5) erfassbar ist und beide Fahrzeugseiten sequentiell erfassbar sind, oder dass die beiden Messeinheiten (1) so plaziert sind, dass jeweils ein Rad (5) einer Fahrzeugachse auf beiden Fahrzeugseiten erfassbar ist, und die Fahrzeugseiten sequentiell erfassbar sind und
**dass** mittels der Auswerteeinrichtung die sequentiell erfassten Bilddaten speicherbar und auswertbar sind.

9. Vorrichtung nach einem der Ansprüche 1 bis 5,
**dadurch gekennzeichnet,**
**dass** vier Messeinheiten (1) mit jeweils mindestens zwei Bildaufnahmeeinrichtungen (2) zur gleichzeitigen Erfassung von vier Rädern (5) des Fahrzeugs vorgesehen sind.

10. Vorrichtung nach einem der Ansprüche 7 bis 9,
**dadurch gekennzeichnet,**
**dass** eine Meßeinheit (1) drei Kameras (2) umfasst.

11. Vorrichtung nach einem der vorhergehenden Ansprüche,
**dadurch gekennzeichnet,**
**dass** zur Beleuchtung der Messmerkmale (8) und der Bezugsmerkmale (4) eine oder mehrere Lichtquellen eingesetzt sind und
**dass** bei Einsatz retroreflektierender Merkmale eine oder mehrere Lichtquellen um ein jeweiliges Objektiv der Bildaufnahmeeinrichtung(en) (2) angeordnet ist/sind.

12. Vorrichtung nach Anspruch 11,
**dadurch gekennzeichnet,**
**dass** die Lichtquellen zum Aussenden von Licht im für das menschliche Auge nicht sichtbaren Bereich ausgelegt sind.

13. Vorrichtung nach einem der vorhergehenden Ansprüche,
**dadurch gekennzeichnet,**
**dass** mindestens ein Messmerkmal (8) und/oder mindestens ein Bezugsmerkmal (4) eine von der Bildaufnahmeeinrichtung (2) erfassbare Codierung trägt.

## Claims

1. Device for determining the wheel geometry and/or axle geometry of motor vehicles in a measuring space, comprising a measuring device having at least one optical image recording device (2), a marking device (3, 4, 8) which has a measuring feature arrangement present or arranged on the wheel (5), at least three measuring features (8) per wheel (5) and at least one reference feature arrangement (3) with at least three reference features (4) per image recording position, and comprising an evaluation device, the position of the reference features (4) in the measuring space being known in the evaluation device and it being possible to record the marking device (3, 4, 8) from at least two different perspectives with the aid of the measuring device,
**characterized**
**in that** the at least one image recording device is set up for recording, from the two different perspectives, a proportion of the same measuring features (8) and reference features (4) which suffices for the evaluation, and
**in that** the evaluation device is designed in such a way that in order to determine the wheel geometry and axle geometry it is possible to ascertain in relation to the reference features (4) the relative position of the measuring features (8) jointly recorded from the different perspectives by means of the at least one image recording device.

2. Device according to Claim 1,
**characterized**
**in that** the reference feature arrangement (3) has a carrier unit whose arrangement in the measuring space can be freely configured and on which the reference features are provided in the form of reference structures or specially mounted reference marks (4).

3. Device according to Claim 1 or 2,
**characterized**
**in that** as additional measuring features bodywork structures or additional specially mounted bodywork markings can be sensed by means of the at least one image recording device (2) and can be incorporated into the evaluation.

4. Device according to one of the preceding claims,
**characterized**
**in that** the reference features (4) are arranged spatially offset with respect to the image recording position.

5. Device according to one of the preceding claims,
**characterized**
**in that** the reference features (4) and/or the measuring features (8) are designed as retroreflective marks, and
**in that** the image recording device is a camera (2).

6. Device according to one of the preceding claims,
**characterized**
**in that** only one image recording device (2) is provided, which can be positioned sequentially at two different positions in order to sense all the wheels (5) of the vehicle jointly in each case, or sequentially at two different positions per side of the vehicle in order to sense all of the wheels (5) of this side of the vehicle jointly in each case, or sequentially at two different positions per wheel (5), and in that the sequentially sensed image data can be stored and evaluated by means of the evaluation device.

7. Device according to one of Claims 1 to 5,
**characterized**
**in that** a measuring unit (1) with at least two image recording devices (2) is provided which can be arranged at only one position in order to sense all the wheels (5) of the vehicle jointly, sequentially on both sides of the vehicle at in each case only one position in order to sense all the wheels (5) jointly per side of the vehicle, or sequentially at only one position per wheel, and
**in that** the sequentially sensed image data can be stored and evaluated by means of the evaluation device.

8. Device according to one of Claims 1 to 5,
**characterized**
**in that** two measuring units (1) with in each case at least two image recording devices (2) are provided,
**in that** the two measuring units (1) are placed on both sides of the vehicle such that they can in each case sense the wheels (5) of one side of the vehicle, or in that the two measuring units (1) are placed on one side of the vehicle such that each can sense one wheel (5) and both sides of the vehicle can be sensed sequentially, or in that the two measuring units (1) are placed such that in each case one wheel (5) of a vehicle axle can be sensed on both sides of the vehicle, and the sides of the vehicle can be sensed sequentially, and
**in that** the sequentially sensed image data can be stored and evaluated by means of the evaluation unit.

9. Device according to one of Claims 1 to 5,
**characterized**
**in that** four measuring units (1) with in each case at least two image recording devices (2) are provided for simultaneously sensing four wheels (5) of the vehicle.

10. Device according to one of Claims 7 to 9,
**characterized**
**in that** a measuring unit (1) comprises three cameras (2).

11. Device according to one of the preceding claims,
**characterized**
**in that** one or more light sources are used to illuminate the measuring features (8) and the reference features (4), and
**in that**, when rectroreflective features are used, one or more light sources is/are arranged about a respective lens of the image recording device(s) (2).

12. Device according to Claim 11,
**characterized**
**in that** the light sources are designed to emit light in a range which is invisible to the human eye.

13. Device according to one of the preceding claims,
**characterized**
**in that** at least one measuring feature (8) and/or at least one reference feature (4) has a code which can be sensed by the image recording device (2).

## Revendications

1. Dispositif de détermination de la géométrie de roue et d'essieux de véhicules à moteur dans un espace de mesure avec un dispositif de mesure optique présentant au moins un dispositif optique de prise de vues (2), avec un dispositif de marquage (3, 4, 8) qui présente un agencement de caractéristiques de mesure présent ou disposé sur la roue (5), avec au moins trois caractéristiques de mesure (8) par roue (5) ainsi qu'au moins un agencement de caractéristiques de référence (3) comportant au moins trois caractéristiques de référence (4) par position de prise de vue, et avec un dispositif d'évaluation, la position des caractéristiques de référence (4) dans l'espace de mesure étant connue dans le dispositif d'évaluation alors que le dispositif de marquage (3, 4, 8) est photographié au moyen du dispositif de mesure à partir d'au moins deux perspectives différentes,
**caractérisé en ce que**
l'au moins un dispositif de prise de vues est orienté pour la photographie d'une partie suffisante, tout au moins pour l'évaluation, des mêmes caractéristiques de mesure (8) et caractéristiques de référence (4) à partir de perspectives différentes, et
le dispositif d'évaluation est conçu de manière que, pour la détermination de la géométrie de roue et d'essieux, la position relative des caractéristiques de mesure (8), photographiées conjointement à partir des deux perspectives différentes au moyen de l'au moins un dispositif de prise de vues, par rapport aux caractéristiques de référence (4) peut être déterminée.

2. Dispositif selon la revendication 1,
**caractérisé en ce que**
l'agencement de caractéristiques de référence (3) présente une unité support dont l'agencement dans l'espace de mesure est librement concevable et sur laquelle les caractéristiques de référence sont prévues sous forme de structures de référence ou de repères de référence (4) disposés spécialement.

3. Dispositif selon la revendication 1 ou 2,
**caractérisé en ce que**
en tant que caractéristiques de mesure supplémentaires, des structures de carrosserie ou des marquages de carrosseries supplémentaires disposés spécialement, sont photographiés au moyen du, au moins un, dispositif de prise de vues (2) et inclus dans l'évaluation,

4. Dispositif selon l'une des revendications précédentes,
**caractérisé en ce que**
les caractéristiques de référence (4) sont disposées de manière décalée dans l'espace par rapport à la position des prises de vues.

5. Dispositif selon l'une des revendications précédentes,
**caractérisé en ce que**
les caractéristiques de référence (4) ou les caractéristiques de mesure (8) sont conçues en tant que repères rétro-réfléchissants, et le dispositif de prise de vues est une caméra (2).

6. Dispositif selon l'une des revendications précédentes,
**caractérisé en ce que**
seulement un dispositif de prise de vues (2) se positionne séquentiellement sur deux positions différentes par rapport à la photographie commune respective de toutes les roues (5) du véhicule, ou séquentiellement sur deux positions différentes par côté du véhicule par rapport à la photographie commune respective de toutes les roues (5) de ce côté du véhicule ou séquentiellement sur deux positions par roue (5), et
les données des images enregistrées séquentiellement sont enregistrées et évaluées au moyen du dispositif d'évaluation.

7. Dispositif selon l'une des revendications 1 à 5,
**caractérisé en ce qu'**
unité de mesure (1) avec au moins deux dispositifs de prise de vues (2), peut être agencée sur seulement une position pour la photographie commune de toutes les roues (5) du véhicule, séquentiellement sur les deux côtés du véhicule à, respectivement, seulement une position pour la photographie commune de toutes les roues (5) par côté du véhicule ou séquentiellement sur seulement une position par roue, et
les données des images photographiées séquentiellement sont enregistrées et évaluées au moyen du dispositif d'évaluation.

8. Dispositif selon l'une des revendications 1 à 5,
**caractérisé en ce que**
deux unités de mesure (1) sont prévues avec respectivement au moins deux dispositifs de prise de vues (2),
les deux unités de mesure (1) sont placées des deux côtés du véhicule de façon à photographier respectivement les roues (5) d'un côté du véhicule, ou les deux unités de mesure (1) sont placées d'un côté du véhicule de façon que chacune photographie une roue (5) et que les deux côtés du véhicule sont photographiés séquentiellement, ou les deux unités de mesure (1) sont placées de façon qu'une roue (5) d'un essieu du véhicule est photographiée respectivement des deux côtés du véhicule et les côtés du véhicule sont photographiés séquentiellement, et
les données des images photographiées séquentiellement sont enregistrées et évaluées au moyen du dispositif d'évaluation.

9. Dispositif selon l'une des revendications 1 à 5,
**caractérisé en ce qu'**
il est prévu quatre unités de mesure (1) avec respectivement au moins deux dispositifs de prise de vues (2) pour la photographie simultanée de quatre roues (5) du véhicule.

10. Dispositif selon l'une des revendications 7 à 9,
**caractérisé en ce qu'**
une unité de mesure (1) comprend trois caméras (2).

11. Dispositif selon l'une des revendications précédentes,
**caractérisé en ce que**
pour l'éclairage des caractéristiques de mesure (8) et des caractéristiques de référence (4), une ou plusieurs sources lumineuses sont utilisées et
en cas d'utilisation de caractéristiques rétro-réfléchissantes, une ou plusieurs source(s) lumineuse(s) est/sont disposée(s) autour de l'objectif respectif du (des) dispositif(s) de prise de vues (2).

12. Dispositif selon la revendication 11,
**caractérisé en ce que**
la source lumineuse est conçue pour émettre de la lumière dans la gamme non visible pour l'oeil humain.

13. Dispositif selon l'une des revendications précédentes,
**caractérisé en ce qu'**
au moins une caractéristique de mesure (8) et/ou au moins une caractéristique de référence (4) porte un codage pouvant être photographié par le dispositif de prise de vues (2).
